# EUROPEAN PATENT SPECIFICATION

(11) **EP 1 405 465 B1**
(45) Date of publication and mention of the grant of the patent: **22.11.2006**
(21) Application number: 02756349.3
(22) Date of filing: 27.06.2002
(51) Int. Cl.: H04L 12/28, H04L 12/56

(54) **IDENTIFYING MULTILINGUAL PARTICIPANTS IN NETWORK COMMUNICATIONS**
IDENTIFIZIERUNG MEHRSPRACHIGER TEILNEHMER AN NETZKOMMUNIKATIONEN
IDENTIFICATION DE PARTICIPANTS MULTILINGUES DANS DES COMMUNICATIONS DE RESEAU

(30) Priority: 05.07.2001 US 899464
(43) Date of publication of application: 07.04.2004
(73) Proprietor: INTEL CORPORATION, Santa Clara, CA 95052 (US)
(72) Inventor: RAMAKESAVAN, Sundaram, Chandler, AZ 85226 (US)
(74) Representative: Dunlop, Hugh Christopher
(86) International application number: PCT/US2002/020769
(87) International publication number: WO 2003/005646

(56) References cited:
- WO-A-00/22860
- WO-A-00/23956
- WO-A-00/51391

## Description

### Background

This invention relates generally to establishing ad hoc wireless networks.

Ad hoc wireless networks involve the establishment of a communications session between a plurality of devices operating under a common wireless communication protocol. Examples of such wireless communication protocols include the Bluetooth protocol (See the Specification of the Bluetooth System, Version 1.1 (February 22, 2001) available from the Bluetooth Special Interest Group) and the I.E.E.E. 802.11 protocol (See Institute of Electrical and Electronics Engineers, Inc. (I.E.E.E.) Std. 802.11, 1999 Edition, "Wireless LAN Medium Access Control and Physical Layer Specification" available from the I.E.E.E. Inc., New York, New York 10016-5997, U.S.A.)

In an ad hoc wireless network, a plurality of users may communicate with one another over a wireless link. Conventionally, the ad hoc wireless network is established using protocols that search out and locate the participants. Once the participants are enumerated, they may be identified on a display screen associated with each device.

Thus, in one example, wireless cell phones may communicate with personal computers, which in turn communicate over the Internet. Each participant in an ad hoc wireless network may automatically be provided with a screen display indicating the other participants.

Each of the participants may be identified in such displays by their text name. However, when participants from countries that use different character sets are involved, their native characters may not translate in all cases. For example, a person using English script in the United States who is communicating with someone in Japan may be unable to read the Japanese characters because the script to convert the Japanese characters to English characters may not be available on the English user's computer and vice versa.

In an ad hoc network in which only one user with a different character set is involved, by deduction, that user may be identified. However, when multiple users with incompatible character sets are involved, each of the users may be unable to determine which of the two incompatible character set users is which. Therefore, it may be difficult to fully utilize the ad hoc wireless network because the participants can not distinguish between the incompatible character set users and, therefore, may not direct communication specifically to one or the other of those users. As a result, advantages of wireless ad hoc networks may be diminished in cases where incompatible character sets are involved.

Examples of such systems as described above are to be found in WO 00/22860A, WO 00/51391A and WO 00/23956A.

More particularly, WO 00/22860A discloses a wireless network which discloses the use of character set independent information about buddies, who may establish communication with each other through a fixed network, and the use of a user interface suggesting that the interface can be implemented using alerts, instructions, and commands. It further suggests that interactions, including submitting and exchanging buddy lists, may be carried out. Therefore, the system simply notifies a user when other participants are nearby. Personal profiles are compared but never exchanged. Instead, a text message is sent when there is a match, indicating to the users that they have matched the personal profile of another user. The remaining documents disclose similar arrangements.

### Summary of the Invention

It is an object of the present invention to provide in an ad hoc wireless network identification of persons participating between users with incompatible character sets.

According to one aspect of the present invention there is provided a method as claimed in claim 1.

According to another aspect of the present invention there is provided a computer program product as claimed in claim 6.

According to a further aspect of the present invention there is provided a system as claimed in claim 11.

Therefore, there is a need for a way to identify persons participating in ad hoc wireless networks between users with incompatible character sets.

### Brief Description of the Drawings

Figure 1 is a schematic depiction of an ad hoc wireless network in accordance with one embodiment of the present invention;
Figure 2 is an identifying screen display in accordance with the prior art;
Figure 3 is a depiction of a screen display in accordance with one embodiment of the present invention;
Figure 4 is a depiction of a screen display in accordance with one embodiment of the present invention;
Figure 5 is a flow chart for SEND software in accordance with one embodiment of the present invention;
Figure 6 is a flow chart for RECEIVE software in accordance with one embodiment of the present invention; and
Figure 7 is a block depiction of a wireless communication terminal in accordance with one embodiment of the present invention.

### Detailed Description

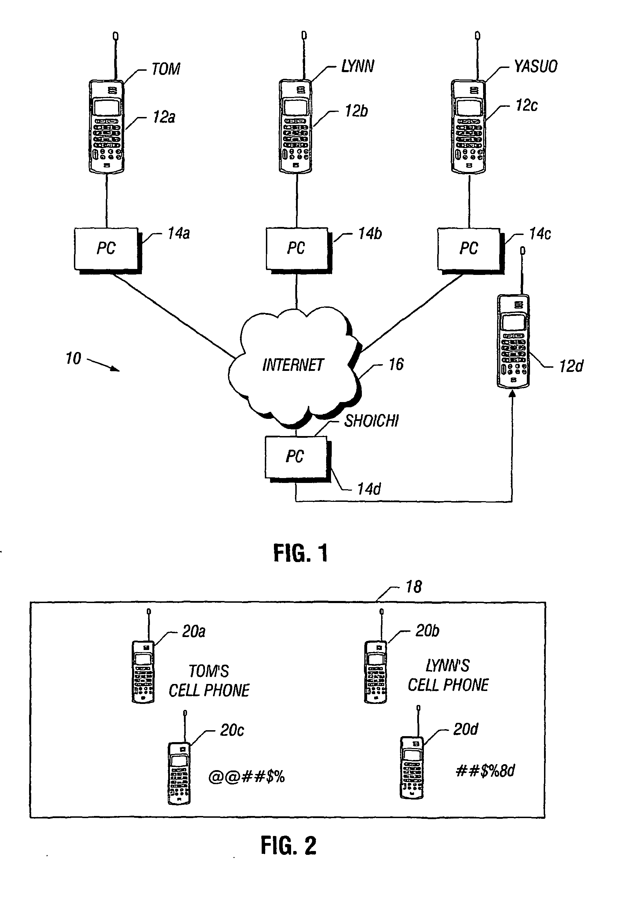

Referring to Figure 1, an ad hoc wireless network 10 may be set up at any time between a plurality of users having compatible systems. Thus, each of the users may have a portable computer 14, which implements a wireless communication protocol between the portable computer 14 and the owner's cellular telephone 12 in one embodiment. Communications may be provided over the Internet 16. As a result, each of the plurality of users may establish a communications session for an ad hoc wireless communication network, which enables any of the participants to communicate with one another. The link between the cellular telephone 12a and the personal computer 14a, for example, may be via an appropriate wireless protocol. Examples of suitable wireless protocol include the Bluetooth protocol and the IEEE 802.11 protocol.

In the example illustrated in Figure 1, the owners of the cellular telephones 12c and 12d are in Japan and their personal computers 14c and 14d utilize the Japanese character set. At the same time, the participants owning the cellular telephones 12a and 12b are in the United Stages and their owners have personal computers 14a and 14b which use the English character set. In this example, the personal computers 14a and 14b do not have the script to convert the Japanese characters for display. As a result, as shown in Figure 2, a screen display 18 may automatically reveal the participants in the ad hoc wireless network. Each participant may be identified by a cell phone symbol 20, in one embodiment, together with the participant's name. However, screen display 18, shown in association with either of the personal computers 14a or 14b that do not include Japanese characters simply insert meaningless characters for the names of the Japanese participants because of the absence of suitable character set translation software on the personal computers 14a and 14b. The same situation would exist for the Japanese participants if their computers did not have the software to convert the English text, but instead, solely handled Japanese character sets.

As a result, a participant in the United States having the screen display 18 may not be able to identify which of the users is Yasuo and which of the users is Shoichi from the apparent information on the display 18. Therefore, it may not be easy to determine how to send a particular communication to one, but not both of those foreign character set users.

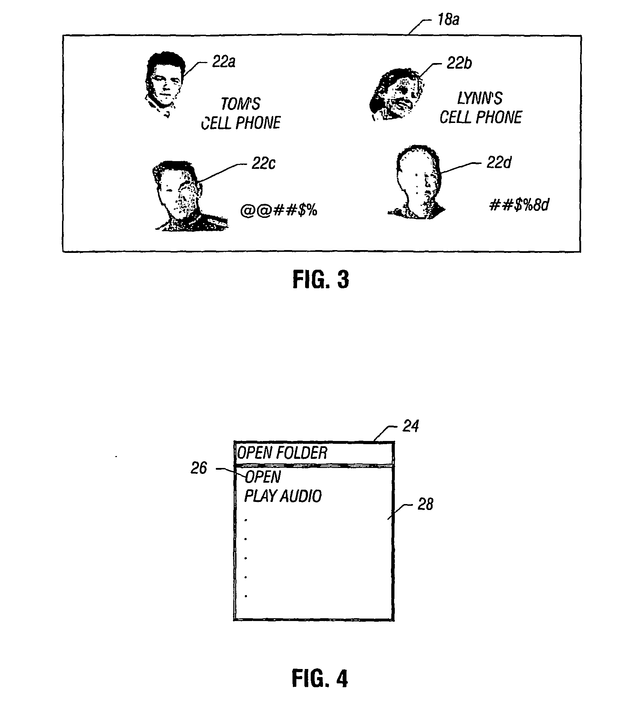

Turning to Figure 3, a screen display 18a in accordance with one embodiment of the present invention may include identifying photographs 22 to identify each of the users. Thus, while the incompatible character sets may not complete the correct names, the user images may be utilized to distinguish between the various users in one embodiment of the present invention. In other embodiments, audio files may be utilized to identify each user. For example, each user may say the user's name and when any user clicks on an image associated with a particular user, such as the image 20a shown in Figure 2, the user's name will be played back. In still another embodiment, each user may be associated with an unique symbol that identifies the user. In one such case, the unique symbol may be a depiction of the user's name in a compatible character set. For example, the Japanese user may provide a file which includes the English characters for that user's name.

As shown in Figure 4, when the user clicks on one of the cellular phone images 20 shown in Figure 2, a dropdown menu 24 may appear. The user can then click on one of the entries 26, such as the OPEN entry, to obtain more information about the other user. Alternatively, the first user may select the PLAY AUDIO entry to hear the second user say the second user's name.

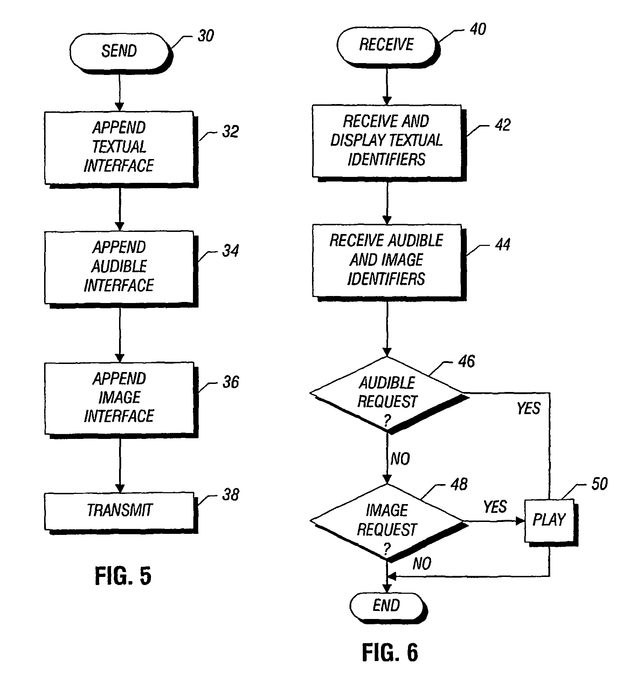

The SEND software 30 for implementing one embodiment of the present invention, prompts the user to append a textual interface as indicated in block 32 of Figure 5. Thus, the user's personal computer may automatically append the user's name for display on display screens 18 associated with personal computers 14 of other participants in an ad hoc wireless network. In addition, the audible interface may be appended as indicated in block 34. The user may be asked, for example, through a graphical user interface, to provide an audible recording of the user's name. Next, the user may be asked to supply an image, for example, through a digital camera associated with the personal computer 14, as indicated in block 36. Finally, one or more of the interface information may be automatically transmitted as indicated in block 38 to the other enumerated participants in the ad hoc wireless communication.

In Figure 6, each of the participants then receives a communication from the other participants using the software 40 in accordance with one embodiment of the present invention. As indicated in block 42, each participant's personal computer 14 receives and displays textual identifiers. Similarly, a personal computer 14 receives and displays audible and image identifiers as indicated in block 44. Upon a request for audible identifiers, as determined at diamond 46, the audible identifier may be played as indicated in block 50. If, instead, the user requests the image, as indicated in block 48, it may be displayed as well. Thus, in some embodiments, the screen display may be as shown in Figure 2 and the images are only provided upon request and selection. Similarly, the audible information may only be provided upon request and selection.

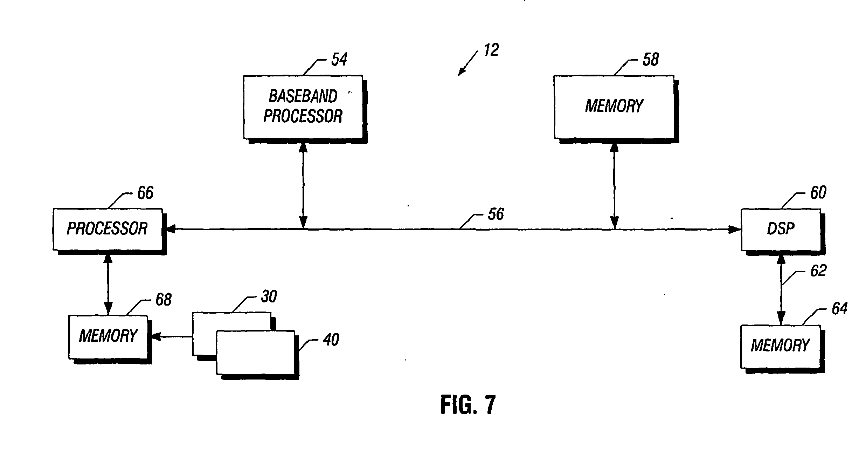

Referring to Figure 7, in accordance with one embodiment of the present invention, each of the cellular telephones 12 may include a bus 56, which is coupled to a baseband processor 54 and a memory 58. A digital signal processor (DSP) 60 may also be coupled to the bus 56, as well as over a bus 62 to a memory 64. An additional gereral-purpose processor 66 coupled to the bus 56 may have its own memory 68 in one embodiment. In one embodiment, the software 30 and 40 may be stored in that memory 68. In other embodiments, the software 30 and 40 may be stored in the peripheral computers 14.

While the present invention has been described with respect to a limited number of embodiments, those skilled in the art will appreciate numerous modifications and variations therefrom. It is intended that the appended claims cover all such modifications and variations as fall within the scope of this present invention.

## Claims

1. A method comprising:
establishing an ad hoc wireless network between wireless devices;
receiving character set independent information about a participant in the ad hoc wireless network (10); **characterised by**
automatically transmitting said character set independent information about a participant from that participant's wireless device to other participants in the ad hoc wireless network.

2. The method of claim 1, wherein receiving character set independent information about a participant includes receiving an audio file that identifies a participant.

3. The method of claim 1, wherein receiving character set independent information about a participant includes receiving a user selectable icon that may be selected to receive additional information about a participant.

4. The method of claim 3, including enabling a participant to select an icon to receive additional information about another participant.

5. The method of claim 1, wherein receiving character set independent information about a participant includes receiving an image file identifying a participant.

6. A computer program product comprising a medium having stored thereon instructions that when loaded and executed by a suitable processor-based system (14), cause the system to:
receive character set independent information about a participant in an ad hoc wireless network (10); **characterised by**
automatically transmitting said information to other participants.

7. The product of claim 6, comprising storage means (58, 64) for storing instructions that enable the processor-based system to receive an audio file that identifies a participant.

8. The product of claim 6, comprising storage means (58, 64) for storing instructions that enable the processor (54, 66) based system to receive a user selectable icon that may be selected to receive additional information about a participant.

9. The product of claim 8, wherein the storage means (58, 64) enabling a participant to select an icon to receive additional information about another participant.

10. The product of claim 6, further comprising storage means (58, 64) for storing instructions that enable the processor-based system to receive an image file identifying a participant.

11. A system comprising:
a processor (54, 66) and
a storage means (58, 64) coupled to said processor for storing instructions that enable the processor (54, 56) to handle character set independent information about a participant in an ad hoc wireless network (10) and transmitting automatically said information to other participants.

12. The system of claim 11 wherein said storage means (58, 64) stores instructions that enable the processor (54, 66) to receive an audio file that identifies a participant.

13. The system of claim 11, wherein said storage means (58, 14) stores instructions that enable the processor to generate a user selectable icon that may be selected to receive additional information about a participant.

14. The system of claim 13, wherein said storage means (58, 14) stores instructions that enable the processor (54, 66) to allow a participant to select an icon to receive additional information about another participant.

15. The system of claim 11, wherein said storage means (58, 64) stores instructions that enable the processor (54, 66) to generate an image identifying a participant.

## Patentansprüche

1. Verfahren, umfassend:
Einrichten eines ad hoc drahtlosen Netzes zwischen drahtlosen Geräten;
Empfangen von zeichensatzunabhängigen Informationen über einen Teilnehmer im ad hoc drahtlosen Netz (10); **gekennzeichnet durch**
automatische Übertragung der zeichensatzunabhängigen Informationen über einen Teilnehmer von dem drahtlosen Gerät dieses Teilnehmers an andere Teilnehmer im ad hoc drahtlosen Netz.

2. Verfahren nach Anspruch 1, wobei das Empfangen der zeichensatzunabhängigen Informationen über einen Teilnehmer das Empfangen einer Audiodatei umfasst, die einen Teilnehmer identifiziert.

3. Verfahren nach Anspruch 1, wobei das Empfangen der zeichensatzunabhängigen Informationen über einen Teilnehmer das Empfangen eines nutzerwählbaren Symbols umfasst, das ausgewählt werden kann, um zusätzliche Informationen über einen Teilnehmer zu empfangen.

4. Verfahren nach Anspruch 3, das die Möglichkeit für einen Teilnehmer umfasst, ein Symbol zum Empfangen zusätzlicher Informationen über einen anderen Teilnehmer zu wählen.

5. Verfahren nach Anspruch 1, wobei das Empfangen der zeichensatzunabhängigen Informationen über einen Teilnehmer das Empfangen einer Bilddatei umfasst, die einen Teilnehmer identifiziert.

6. Computerprogrammprodukt, das ein Medium umfasst, welches darauf gespeicherte Anweisungen enthält, die beim Laden und Ausführen durch ein geeignetes prozessorbasiertes System (14) bewirkt, dass das System:
zeichensatzunabhängige Informationen über einen Teilnehmer in einem ad hoc drahtlosen Netz (10) empfängt, **gekennzeichnet durch**
automatisches Senden der Informationen an andere Teilnehmer.

7. Produkt nach Anspruch 6, das Speichermittel (58, 64) zum Speichern von Anweisungen umfasst, die dem prozessorbasierten System ermöglichen, eine Audiodatei, die einen Teilnehmer identifiziert, zu empfangen.

8. Produkt nach Anspruch 6, das Speichermittel (58, 64) zum Speichern von Anweisungen umfasst, die dem System auf Basis des Prozessors (54, 66) ermöglichen, ein nutzergewähltes Symbol zu empfangen, das gewählt werden kann, um zusätzliche Informationen über einen Teilnehmer zu empfangen.

9. Produkt nach Anspruch 8, wobei die Speichermittel (58, 64) einem Teilnehmer ermöglichen, ein Symbol zum Empfangen zusätzlicher Informationen über einen anderen Teilnehmer zu wählen.

10. Produkt nach Anspruch 6, das ferner Speichermittel (58, 64) zum Speichern von Anweisungen umfasst, die dem prozessorbasierten System ermöglichen, eine Bilddatei, die einen Teilnehmer identifiziert, zu empfangen.

11. System, umfassend:
einen Prozessor (54, 66) und
ein Speichermittel (58, 64), das an den Prozessor zum Speichern von Anweisungen gekoppelt ist, die dem Prozessor (54, 56) ermöglichen, zeichensatzunabhängige Informationen über einen Teilnehmer in einem ad hoc drahtlosen Netz (10) zu handhaben und automatisch die Informationen an andere Teilnehmer zu senden.

12. System nach Anspruch 11, wobei das Speichermittel (58, 64) Anweisungen speichert, die dem Prozessor (54, 66) ermöglichen, eine Audiodatei, die einen Teilnehmer identifiziert, zu empfangen.

13. System nach Anspruch 11, wobei das Speichermittel (58, 14) Anweisungen speichert, die dem Prozessor ermöglichen, ein nutzerwählbares Symbol zu erzeugen, das gewählt werden kann, um zusätzliche Informationen über einen anderen Teilnehmer zu empfangen.

14. System nach Anspruch 13, wobei das Speichermittel (58, 14) Anweisungen speichert, die dem Prozessor (54, 66) ermöglichen, einen Teilnehmer ein Symbol zum Empfangen zusätzlicher Informationen über einen anderen Teilnehmer wählen zu lassen.

15. System nach Anspruch 11, wobei das Speichermittel (58, 64) Anweisungen speichert, die dem Prozessor (54, 66) ermöglichen, ein Bild zu erzeugen, das einen Teilnehmer identifiziert.

## Revendications

1. Un procédé comprenant :
l'établissement d'un réseau sans fil ad hoc entre des dispositifs sans fil;
la réception d'une information indépendante d'un jeu de caractères, concernant un participant dans le réseau sans fil ad hoc (10); **caractérisé par**
l'émission automatique de l'information indépendante d'un jeu de caractères, concernant un participant, à partir du dispositif sans fil de ce participant vers d'autres participants dans le réseau sans fil ad hoc.

2. Le procédé selon la revendication 1, dans lequel la réception de l'information indépendante d'un jeu de caractères concernant un participant, comprend la réception d'un fichier audio qui identifie un participant.

3. Le procédé selon la revendication 1, dans lequel la réception de l'information indépendante d'un jeu de caractères concernant un participant, comprend la réception d'une icône pouvant être sélectionnée par l'utilisateur, qui peut être sélectionnée pour recevoir de l'information supplémentaire concernant un participant.

4. Le procédé selon la revendication 3, incluant l'opération concernant à permettre à un participant de sélectionner une icône pour recevoir une information supplémentaire concernant un autre participant.

5. Le procédé selon la revendication 1, dans lequel la réception de l'information indépendante d'un jeu de caractères, concernant un participant, comprend la réception d'un fichier d'image identifiant un participant.

6. Un produit - programme informatique comprenant un support sur lequel sont stockées des instructions qui, lorsqu'elles sont chargées et exécutées par un système basé sur un processeur (14), de type approprié, commandent au système de :
recevoir une information indépendante d'un jeu de caractères concernant un participant, dans un réseau sans fil ad hoc (10); **caractérisé par**
l'émission automatique de ladite information vers d'autres participants.

7. Le produit selon la revendication 6, comprenant un moyen de stockage (58, 64) pour stocker des instructions qui permettent au système basé sur un processeur de recevoir un fichier audio qui identifie un participant.

8. Le produit selon la revendication 6, comprenant un moyen de stockage (58, 64) pour stocker des instructions qui permettent au système basé sur un processeur (54, 66) de recevoir une icône pouvant être sélectionnée par l'utilisateur, qui peut être sélectionnée pour recevoir une information supplémentaire concernant un participant.

9. Le produit selon la revendication 8, dans lequel le moyen de stockage (58, 64) permet à un participant de sélectionner une icône pour recevoir une information supplémentaire concernant un autre participant.

10. Le produit selon la revendication 6, comprenant un moyen de stockage (58, 64) pour stocker des instructions qui permettent au système basé sur un processeur de recevoir un fichier d'image identifiant un participant.

11. Un système comprenant :
un processeur (54, 66) et
un moyen de stockage (58, 64) couplé au processeur pour stocker des instructions qui permettent au processeur (54, 56) de traiter une information indépendante d'un jeu de caractères, concernant un participant dans un réseau sans fil ad hoc (10), et pour émettre automatiquement ladite information vers d'autres participants.

12. Le système selon la revendication 11, dans lequel le moyen de stockage (58, 64) stocke des instructions qui permettent au processeur (54, 66) de recevoir un fichier audio qui identifie un participant.

13. Le système selon la revendication 11, dans lequel le moyen de stockage (58, 14) stocke des instructions qui permettent au processeur de générer une icône pouvant être sélectionnée par l'utilisateur, qui peut être sélectionnée pour recevoir de l'information supplémentaire concernant un participant.

14. Le système selon la revendication 13, dans lequel le moyen de stockage (58, 14) stocke des instructions qui permettent au processeur (54, 66) d'autoriser un participant à sélectionner une icône pour recevoir de l'information supplémentaire concernant un autre participant.

15. Le système selon la revendication 11, dans lequel le moyen de stockage (58, 64) stocke des instructions qui permettent au processeur (54, 56) de générer une image identifiant un participant.
